# EUROPEAN PATENT SPECIFICATION

(11) **EP 4 621 635 B1**
(45) Date of publication and mention of the grant of the patent: **25.11.2026**
(21) Application number: 22967646.5
(22) Date of filing: 09.12.2022
(51) Int. Cl.: G06K 7/00, H04W 4/80, H04W 40/00, H04L 43/00, H04L 45/302

(54) **RFID TAG INFORMATION TRANSMISSION METHODS AND APPARATUSES, DEVICE, AND STORAGE MEDIUM**
VERFAHREN UND VORRICHTUNGEN ZUR ÜBERTRAGUNG VON RFID-ETIKETT-INFORMATIONEN, VORRICHTUNG UND SPEICHERMEDIUM
PROCÉDÉS ET APPAREILS DE TRANSMISSION D'INFORMATIONS D'ÉTIQUETTE RFID, DISPOSITIF, ET SUPPORT DE STOCKAGE

(43) Date of publication of application: 24.09.2025
(73) Proprietor: GUANGDONG OPPO MOBILE TELECOMMUNICATIONS CORP., LTD., Dongguan, Guangdong 523860 (CN)
(72) Inventor: GUO, Yali, Dongguan, Guangdong 523860 (CN); LU, Fei, Dongguan, Guangdong 523860 (CN); YANG, Haorui, Dongguan, Guangdong 523860 (CN)
(74) Representative: Novagraaf Technologies
(86) International application number: PCT/CN2022/138051
(87) International publication number: WO 2024/119498

(56) References cited:
- WO-A1-2019/223466
- CN-A- 111 770 545
- CN-A- 113 194 036
- CN-A- 113 194 036
- CN-A- 113 498 217
- CN-A- 114 221 869
- CN-A- 114 285 794
- CN-A- 114 285 794
- US-A1- 2020 160 261
- US-A1- 2021 075 865

## Description

### TECHNICAL FIELD

Embodiments of the present disclosure relate to the technical field of communications, and in particular, relate to a method and apparatus for transmitting information of electronic tags.

### RELATED ART

In a radio frequency identification (RFID) system, an RFID reader/writer is a device that reads information from or write information into an electronic tag. When the RFID system operates, the RFID reader/writer transmits RF energy in an area to generate an electromagnetic field, and the size of the area depends on transmit power. An electronic tag within the coverage area of the RFID reader/writer is triggered to transmit data stored in the electronic tag or modify data stored in the electronic tag according to the instruction of the RFID reader/writer. The RFID reader/writer conducts a contactless two-way data communication with the electronic tag using wireless RF to read information from and write information into the electronic tag, such that target identification and data exchange are implemented.

Generally, an electronic tag has lower power consumption and even does not need to be connected to a power source or battery. For example, a passive electronic tag may supply power to itself transitorily by receiving microwave signals from the RFID reader/writer or by acquiring energy using an electromagnetic induction coil so as to complete information exchange. The RFID has the characteristic of a shorter transmission range and is applicable to local management and communication of items, e.g., management of items in a warehouse, archives management, access card management, highway electronic payment and the like.

Currently, the transmission of information of electronic tags in a cellular communication network requires further research. CN 113194036 A discloses a routing method for a multi-label network, where a defined frame structure between a reader-writer and an electronic label ensures accurate low-power backscattered signal feedback. An excited passive label performs µ code encoding of its ID information at different chip rates, and the label at each hop performs µ code decoding on the received signal before reflecting both the decoded ID and its own ID back to the excitation source. CN 114 285794 A discloses a message forwarding control method applied to each service node in a transmission network, where the service node is connected to at least two forwarding lines. The method comprises: extracting feature information of a to-be-forwarded message to identify its service application type; adding a corresponding label based on a preset mapping between service application types and labels; and forwarding the message via the line specified in the routing rule associated with that label, wherein said line is determined according to the service application type corresponding to the label. US 2021/075865 A1 discloses a communication method. The method includes: obtaining a media access control (MAC) address that is of a terminal device and that is bound to a session and first route information of an interface, corresponding to the session, between a user plane function network element and a data network; and sending, to an application function network element or a gateway of the data network, the MAC address that is of the terminal device and that is bound to the session and the first route information. US 2020/160261 A1 discloses that methods are provided for routing RFID location data from an RFID tag reader to a record-keeping unit. A first tagging entry is received from a first record-keeping unit. The information associated with the first tagging entry is stored in a data store. A first set of location data is received, indicating that the RFID tag of the first item has been read by an RFID tag reader. It is algorithmically determined that the received location data corresponds to the first tagging entry received from the first record-keeping unit. The first set of location data is communicated to the first record-keeping unit.

### SUMMARY

Embodiments of the present disclosure provide a method and apparatus for transmitting information of electronic tags. The technical solutions are as follows.

According to some embodiments of the present disclosure, a method for transmitting information of electronic tags is provided as defined in claim 1.

According to some embodiments of the present disclosure, a method for transmitting information of electronic tags is provided as defined in claim 8.

According to some embodiments of the present disclosure, an apparatus for transmitting information of electronic tags is provided as defined in claim 12.

According to some embodiments of the present disclosure, an apparatus for transmitting information of electronic tags is provided as defined in claim 13.

### BRIEF DESCRIPTION OF DRAWINGS

FIG. 1 is a schematic diagram of a network architecture according to some embodiments of the present disclosure;
FIG. 2 is an architecture diagram of a 5G system according to some embodiments of the present disclosure;
FIG. 3 is an architecture diagram of a 5G system according to some embodiments of the present disclosure;
FIG. 4 is a flowchart of a method for transmitting information of electronic tags according to some embodiments of the present disclosure;
FIG. 5 is a flowchart of a method for transmitting information of electronic tags according to some embodiments of the present disclosure;
FIG. 6 is a flowchart of a method for transmitting information of electronic tags according to some embodiments of the present disclosure;
FIG. 7 is a block diagram of an apparatus for transmitting information of electronic tags according to some embodiments of the present disclosure;
FIG. 8 is a block diagram of an apparatus for transmitting information of electronic tags according to some embodiments of the present disclosure; and
FIG. 9 is a schematic structural diagram of a communication device according to some embodiments of the present disclosure.

### DETAILED DESCRIPTION

For clearer descriptions of the objectives, technical solutions, and advantages of the present disclosure, the embodiments of the present disclosure are further described in detail hereinafter with reference to the accompanying drawings.

The network architecture and services scenarios described in the embodiments of the present disclosure are intended to describe the technical solutions according to the embodiments of the present disclosure more clearly, but do not constitute limitations on the technical solutions according to the embodiments of the present disclosure. Those of ordinary skill in the art may understand that, with the evolution of the network architecture and the emergence of new services scenarios, the technical solutions according to the embodiments of the present disclosure are also applicable to similar technical problems.

The technical solutions according to the embodiments of the present disclosure are applicable to various communication systems, such as a global system of mobile communication (GSM), a code-division multiple access (CDMA) system, a wideband code-division multiple access (WCDMA) system, a general packet radio service (GPRS) system, a long-term evolution (LTE) system, an advanced LTE (LTE-A) system, a new radio (NR) system, an evolved system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN) system, a wireless fidelity (Wi-Fi) system, a 5^{th} generation (5G) system, or other communication systems.

Generally, a conventional communication system supports a limited quantity of connections and is easy to implement. However, with the development of communication technologies, a mobile communication system supports not only conventional communications modes but also other communications modes, such as device-to-device (D2D) communications, machine-to-machine (M2M) communications, machine-type communications (MTC), vehicle-to-vehicle (V2V) communications, or vehicle-to-everything (V2X) communications. The embodiments of the present disclosure are also applicable to these communication systems.

The communication system in the embodiments of the present disclosure may be applicable to a carrier aggregation (CA) scenario, a dual connectivity (DC) scenario, and a standalone (SA) networking scenario.

The communication system in the embodiments of the present disclosure may be applicable to an unlicensed spectrum. The unlicensed spectrum may also be considered as a shared spectrum. Alternatively, the communication system in the embodiments of the present disclosure may be applicable to a licensed spectrum. The licensed spectrum may also be considered as an unshared spectrum.

The embodiments of the present disclosure may be applicable to the NTN system and a terrestrial network (TN) system.

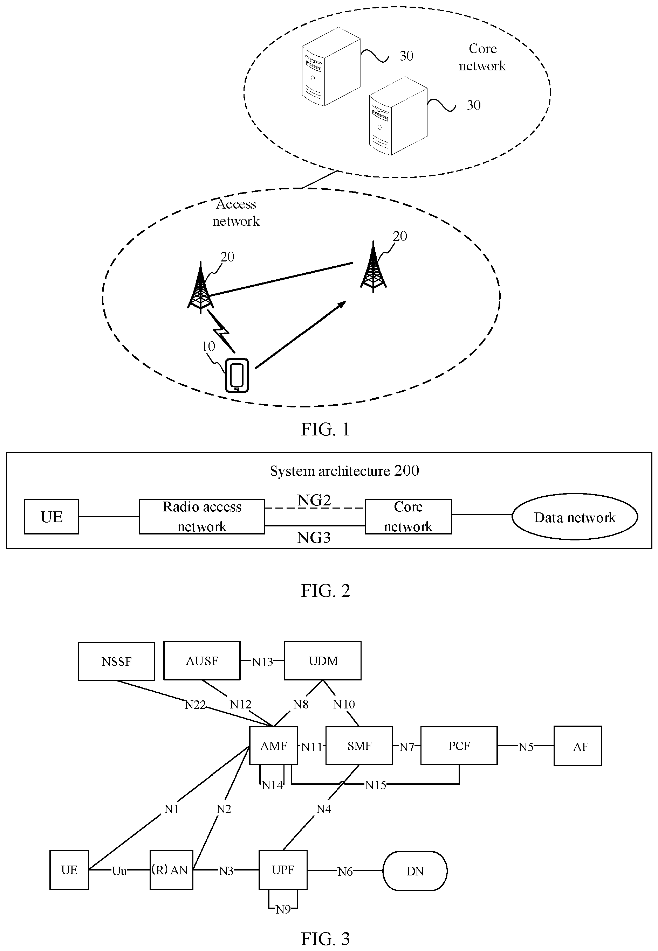

FIG. 1 is a schematic diagram of a network architecture according to some embodiments of the present disclosure. The network architecture may involve a terminal device 10, an access network device 20, and a core network element 30.

The terminal device 10 may be a user equipment (UE), an access terminal, a subscriber unit, a subscriber station, a mobile station, a mobile platform, a remote station, a remote terminal, a mobile device, a wireless communication device, a user agent, or a user apparatus. In some embodiments, the terminal device 10 may also be a cellular phone, a cordless phone, a Session Initiation Protocol (SIP) phone, a wireless local loop (WLL) station, a personal digital assistant (PDA), a handheld device with a wireless communication function, a computing device or another processing device connected to a wireless modem, a vehicle-mounted device, a wearable device, a terminal device in a 5G system, a terminal device in an evolved public land mobile network (PLMN), or the like, which is not limited in the embodiments of the present disclosure. For the convenience of description, the devices mentioned above are collectively referred to as the terminal device. A plurality of terminal devices 10 are usually deployed. At least one terminal device 10 may be distributed in a cell managed by each access network device 20. In the embodiments of the present disclosure, the "terminal device" and the "UE" are generally used interchangeably, and those skilled in the art may understand their meaning.

The access network device 20 is a device deployed in an access network to provide a wireless communication function for the terminal device 10. The access network device 20 may include various forms of macro base stations, micro base stations, relay stations, access points, and the like. In systems employing different radio access technologies, devices with the function of the access network device may have different names, for example, gNodeB or gNB in a 5G NR system. As the communication technologies evolve, the name "access network device" may change. For the convenience of description, in the embodiments of the present disclosure, the above apparatuses providing the wireless communication function for the terminal device 10 are collectively referred to as the access network device. In some embodiments, a communication relationship may be established between the terminal device 10 and the core network element 30 using the access network device 20. For example, in an LTE system, the access network device 20 may be an evolved universal terrestrial radio access network (EUTRAN) or at least one eNodeB in the EUTRAN. In a 5G NR system, the access network device 20 may be a radio access network (RAN) or at least one gNB in the RAN.

The core network element 30 is a network element deployed in a core network. The core network element 30 mainly functions to provide a user connection, user management and service bearing, and to provide an interface to an external network as a bearer network. For example, core network elements in the 5G NR system may include network elements such as an access and mobility management function (AMF), a user plane function (UPF), and a session management function (SMF). In addition, the core network element may be considered as a functional entity, and at least one core network element is deployed in a physical device.

In some embodiments, the access network device 20 communicate with the core network element 30 using a specific air interface technology, e.g., an NG interface in the 5G NR system. The access network device 20 communicates with the terminal device 10 using a specific air interface technology, e.g., a Uu interface.

The "5G NR system" in the embodiments of the present disclosure may also be referred to as a 5G system or an NR system, but those skilled in the art may understand its meaning. The technical solutions provided in the embodiments of the present disclosure may be applicable to the LTE system, the 5G NR system, an evolved system subsequent to the 5G NR system, a narrowband Internet of Things (NB-IoT) system, and other communication systems. This is not limited in the present disclosure.

In the embodiments of the present disclosure, the access network device provides services for a cell. The terminal device communicates with the access network device over a transmission resource (for example, a frequency-domain resource or a spectrum resource) on a carrier used by the cell. The cell may be a cell corresponding to the access network device (for example, a base station). The cell may belong to a macro base station or a base station corresponding to a small cell. The small cell herein may include a metro cell, a micro cell, a pico cell, a femto cell, and the like. These small cells have the characteristics of small coverage and low transmit power, and are applicable to providing high-rate data transmission services.

FIG. 2 is a schematic diagram of a 5G system architecture according to some embodiments of the present disclosure. As illustrated in FIG. 2, the system architecture 200 may include a UE (i.e., the "terminal device" introduced above), a (radio) access network ((R)AN), a core network, and a data network (DN). The UE, the (R)AN, and the core network are the main constituents of the architecture, and are logically divided into two parts, i.e., a user plane and a control plane. The control plane is responsible for management of mobile networks, and the user plane is responsible for transmission of service data. In FIG. 2, the reference point NG2 is located between the (R)AN control plane and the core network control plane, the reference point NG3 is located between the (R)AN user plane and the core network user plane, and the reference point NG6 is located between the core network user plane and a data network.

The UE is an entrance for mobile users to interact with the network, and is capable of providing basic computing capabilities and storage capabilities, displaying service windows to users, and receiving user operation inputs. The UE establishes, using a next-generation air interface technology, a signal connection and a data connection with the (R)AN to transmit control signals and service data to a mobile network.

The (R)AN is similar to a base station in a conventional network and is deployed near UEs. The (R)AN provides network access functions for authorized users in specific areas, and transmits user data according to user levels, service requirements, and the like over transmission tunnels of different qualities. The (R)AN is capable of managing and reasonably using its own resources, providing access services to UEs on demand, and forwarding control signals and user data between UEs and the core network.

The core network is responsible for maintaining mobile network subscription data, managing network elements of mobile network, and providing UEs with functions such as session management, mobility management, policy management, and security authentication. When a UE is attached, the core network provides network access authentication for the UE. When the UE initiates a service request, the core network allocates network resources to the UE. When the UE moves, the core network updates network resources for the UE. When the UE is idle, the core network provides a fast recovery mechanism for the UE. When the UE is detached, the core network releases network resources for the UE. When the UE has service data, the core network provides data routing functions for the UE, such as forwarding uplink data to the DN, or receiving downlink data from the DN and forwarding the downlink data to the (R)AN, thereby transmitting the downlink data to the UE.

The DN is a data network that provides service services to users. Generally, clients are disposed in UEs and servers are disposed in the DNs. The DN may be a private network such as a local area network, an external network not controlled by an operator, such as the Internet, or a proprietary network jointly deployed by operators, such as a network deployed for configuring Internet Protocol (IP) multimedia network subsystem (IMS) services.

FIG. 3 is a detailed architecture determined on the basis of FIG. 2. The user plane of the core network includes a UPF, and the control plane of the core network includes an authentication server function (AUSF), an AMF, an SMF, a network slice selection function (NSSF), a network exposure function (NEF), a network repository function (NRF), a unified data management (UDM), a policy control function (PCF), and an application function (AF).

In the architecture illustrated in FIG. 3, the UE establishes an access stratum (AS) connection with the (R)AN over a Uu interface to exchange AS messages and transmit wireless data with the (R)AN. The UE establishes a non-access stratum (NAS) connection with the AMF over an NI interface to exchange NAS messages with the AMF. The AMF is a mobility management function in the core network, and the SMF is a session management function in the core network. In addition to mobility management of the UE, the AMF is also responsible for forwarding messages related to session management between UE and the SMF. The PCF is a policy management function in the core network, and is responsible for formulating policies related to mobility management, session management, charging, and the like for the UE. The UPF is a user plane function in the core network, and is responsible for communicating data with an external DN over an N6 interface, and communicating data with the (R)AN over an N3 interface. After establishing a connection with a 5G network over the Uu interface, the UE establishes a protocol data unit (PDU) session under control of the SMF for data transmission.

It should be noted that the names of the interfaces between the network elements in FIG. 2 and FIG. 3 are merely exemplary. In specific implementations, the names of the interfaces may be different, which are not specifically limited in the embodiments of the present disclosure. The names of the network elements (such as the SMF, the AF, and the UPF) included in FIG. 2 and FIG. 3 are also merely exemplary and do not limit the functions of the network elements. In 5GS and other future networks, the above network elements may also have other names, which are not specifically limited in the embodiments of the present disclosure. For example, in a 6G network, some or all of the above network elements may use the terminologies used in 5G, or may adopt other names, which are described herein in a unified manner and are not described hereinafter. In addition, it should be understood that the names of the messages (or signaling) transmitted between the network elements are merely exemplary and do not constitute any limitation on the functions of the messages.

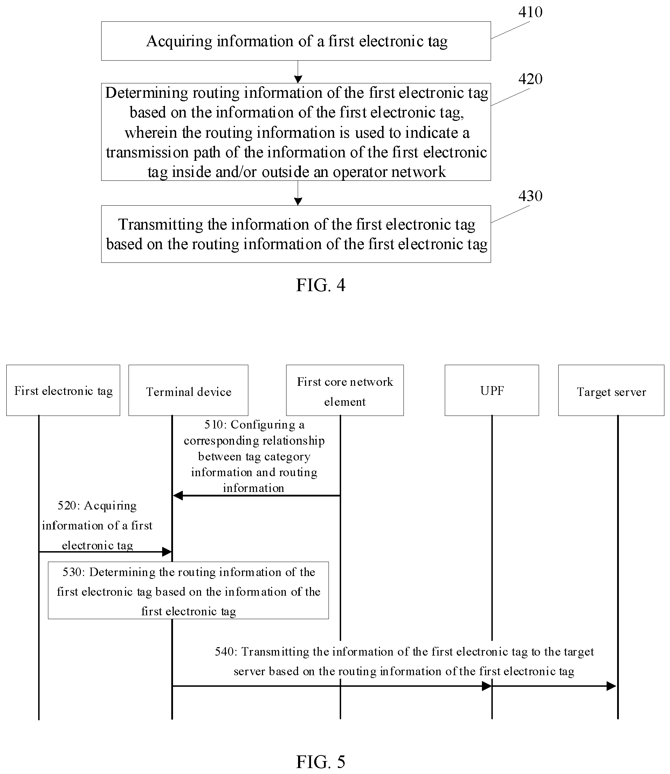

FIG. 4 is a flowchart of a method for transmitting information of electronic tags according to some embodiments of the present disclosure. The method is applicable to the network architectures illustrated in FIG. 1 to FIG. 3. For example, the method is applicable to a terminal device or a core network element. As illustrated in FIG. 4, the method includes at least one of following processes 410 to 430.

In process 410, information of a first electronic tag is acquired.

The first electronic tag may be any electronic tag. In some embodiments, the electronic tag is composed of a coupling element and a chip, and the tag has a unique electronic code. A highcapacity electronic tag has user-writable storage space, and is attached to an object for identification of the object. In the embodiments of the present disclosure, categories of the electronic tags are not limited. For example, the electronic tags may be RFID tags or other categories of electronic tags, such as passive IoT tags and ambient IoT tags.

The information of the first electronic tag may be any information about the first electronic tag. Exemplarily, the information of the first electronic tag may include identification information of the first electronic tag. In some embodiments, the information of the first electronic tag may further include other information of the first electronic tag, such as location information of the first electronic tag and information acquired by the first electronic tag.

The method according to this embodiment may be applicable to the terminal device, and may also be applicable to a core network element.

Exemplarily, in a case where the method is applicable to the terminal device, the terminal device acquires the information of the first electronic tag. For example, the terminal device directly acquires the information of the first electronic tag from the first electronic tag, or the terminal device acquires the information of the first electronic tag by further processing based on the information acquired from the first electronic tag.

Exemplarily, in a case where the method is applicable to the core network element which is also referred to as a second core network element for the convenience of description), the second core network element acquires the information of the first electronic tag. For example, the second core network element receives the information of the first electronic tag from the terminal device or an access network device. In some embodiments, the second core network element is a server deployed in a core network for receiving the information of the electronic tags. In some embodiments, information of the second core network element is preconfigured in the terminal device or the access network device. For example, the information of the second core network element includes at least one of an IP address, a domain name or the like of the second core network element. The terminal device or the access network device, after acquiring the information of the first electronic tag, transmits the information of the first electronic tag to the second core network element based on the information of the second core network element.

In process 420, routing information of the first electronic tag is determined based on the information of the first electronic tag, wherein the routing information of the first electronic tag is used to indicate a transmission path of the information of the first electronic tag inside and/or outside an operator network.

After acquiring the information of the first electronic tag, the terminal device or the second core network element needs to transmit the information of the first electronic tag to a target server. The target server may be considered as a server that needs to acquire information of the first electronic tag. The target server may be deployed inside or outside the operator network. In order to transmit the information of the first electronic tag to the target server, the terminal device or the second core network element may determine the routing information of the first electronic tag based on the information of the first electronic tag, so as to transmit the information of the first electronic tag inside and/or outside the operator network based on the transmission path indicated by the routing information, and finally the information of the first electronic tag reaches the target server.

In some embodiments, the routing information includes at least one of: route descriptor information of a PDU session or information of a target server for collecting the information of the electronic tags. Exemplarily, the route descriptor information includes at least one of: a data network name (DNN) or slice information. Exemplarily, the information of the target server includes an IP address of the target server.

In some embodiments, in a case where the method is applicable to the terminal device, the routing information includes at least one of: the route descriptor information of the PDU session, or the information of the target server for acquiring the information of the electronic tags.

In some embodiments, in a case where the method is applicable to the second core network element, the routing information includes information of the target server for collecting the information of the electronic tags.

Process 420 includes: determining tag category information of the first electronic tag based on the information of the first electronic tag; and determining the routing information of the first electronic tag based on a corresponding relationship between the tag category information and the routing information.

In some embodiments, the tag category information may be identification information of an electronic tag, or part of fields of the identification information of an electronic tag, or information used to indicate that a tag is an electronic tag. For example, the tag category information of the first electronic tag may be identification information of the first electronic tag, or part of fields of the identification information of the first electronic tag, or information used to indicate that the first electronic tag is an electronic tag. The identification information of the electronic tag is used to uniquely identify the electronic tag, and different electronic tags have different identification information. In some embodiments, the identification information includes, but is not limited to, at least one of: an electronic product code (EPC), a generic public subscription identifier (GPSI), a subscription concealed identifier (SUCI), or a subscription permanent identifier (SUPI). Exemplarily, the tag category information of the first electronic tag is part of the fields of the identification information of the first electronic tag, such as a vendor identification code in the EPC, an item category code, and a domain identifier in the GPSI.

The terminal device or the second core network element determines the tag category information of the first electronic tag based on the information of the first electronic tag, and then determines, from the corresponding relationship between the tag category information and the routing information, the routing information corresponding to the tag category information of the first electronic tag as the routing information of the first electronic tag. For example, the above corresponding relationship includes routing information 1 corresponding to tag category information A, routing information 2 corresponding to tag category information B. Assuming that the tag category information of the first electronic tag is tag category information B, then the routing information of the first electronic tag is routing information 2.

The terminal device and/or the second core network element acquires the above corresponding relationship between the tag category information and the routing information from a first core network element. That is, the first core network element configures the corresponding relationship between the tag category information and the routing information for the terminal device and/or the second core network element. The first core network element may be a PCF, or the first core network element is a network element deployed in a core network for managing electronic tags.

Exemplarily, in a case where the method is applicable to the terminal device, the terminal device acquires the above corresponding relationship between the tag category information and the routing information from the first core network element.

In some embodiments, the first core network element configures the above corresponding relationship for the terminal device by enhancing the existing UE route selection policy (URSP) rules, that is, the above corresponding relationship is configured in the URSP rule.

In some embodiments, the first core network element configures the above corresponding relationship for the terminal device by carrying the corresponding relationship in an NAS message. For example, the first core network element transmits an NAS message that carries the corresponding relationship to the terminal device.

In some embodiments, the first core network element configures the above corresponding relationship for the terminal device by carrying the corresponding relationship in user plane data. For example, the first core network element transmits user plane data that carries the corresponding relationship to the terminal device.

The first core network element may also configure the above corresponding relationship for the terminal device in other ways, which is not limited in the embodiments of the present disclosure.

In some embodiments, in a case where the above corresponding relationship is configured in the URSP rule, a traffic descriptor in the URSP rule includes the tag category information, and a route selection descriptor in the URSP rule includes the routing information. Exemplarily, an enhancement to the URSP rule is illustrated in table 1 and table 2 below, and includes at least one of the following enhancements.

As illustrated in Table 1, the tag category information is added to the traffic descriptor for matching traffic in the URSP rule.

As illustrated in Table 2, information of a target server for collecting the information of the electronic tags is added to the route selection descriptor in the URSP rule.

**Table 1**

| Information name | Description |
|---|---|
| Traffic descriptor | |
| Application identifiers | It includes OSId and OSAppld(s) |
| IP header descriptors | Destination IP 3 tuple(s) |
| Domain name description | A target domain name |
| ... | ... |
| Electronic tag category information | It is identification information of an electronic tag, or part of fields of identification information of an electronic tag, or information used to indicate a tag is an electronic tag. |
| **List of Route selection descriptors** | |

**Table 2**

| Information name | Description |
|---|---|
| **Route selection components** | |
| Network slice selection | Slice identifier |
| DNN selection | DNN |
| ... | ... |
| Information of target server | For example, an IP address of the target server |

It should be noted that in a case where the routing information includes the route descriptor information of the PDU session, such as the DNN and the slice information, there is no need to add the route descriptor information of the PDU session to the route selection descriptor in the URSP rule since the route selection descriptor in the existing URSP rule has already included the above information. In a case where the routing information includes the information of the target server, the information of the target server may be added to the route selection descriptor in the URSP rule.

In process 430, the information of the first electronic tag is transmitted based on the routing information of the first electronic tag.

The terminal device or the second core network element transmits the information of the first electronic tag based on the routing information of the first electronic tag.

Exemplarily, for the terminal device, in a case where the routing information includes the route descriptor information of the PDU session, the terminal device transmits a data packet including the information of the first electronic tag over a first PDU session, wherein the first PDU session is a PDU session corresponding to the above route descriptor information; and/or in a case where the routing information includes the information of the target server, the terminal device transmits a data packet including the information of the first electronic tag to the target server, wherein the data packet carries the information of the target server.

In some embodiments, the routing information includes the route descriptor information of the PDU session (e.g., a DNN or slice information), but does not include the information of the target server. The terminal device transmits a data packet including the information of the first electronic tag over a first PDU session, wherein the first PDU session is a PDU session corresponding to the above route descriptor information. After receiving the data packet transmitted by the terminal device over the first PDU session, the UPF further forwards the data packet or the information of the first electronic tag that is carried in the data packet to the network corresponding to the above route descriptor information, such that the data packet or the information of the first electronic tag finally reaches the target server, or the UPF directly forwards the data packet or the information of the first electronic tag that is carried in the data packet to a default target server or a default target server corresponding to the above route descriptor information.

In some embodiments, the routing information includes the information (e.g., IP address) of the target server, but does not include the route descriptor information of the PDU session. The terminal device determines a PDU session to be used according to the implementation method in the prior art, or selects a default PDU session to transmit the information of the first electronic tag, wherein the header of the data packet that carries the information the first electronic tag includes the information of the target server. After receiving the above data packet transmitted by the terminal device over the PDU session, the UPF transmits the data packet or the information of the first electronic tag that is carried in the data packet to the target server based on the information of the target server that is included in the header of the data packet.

In some embodiments, the routing information includes the route descriptor information (e.g., a DNN or slice information) of the PDU session and the information (e.g., an IP address) of the target server. The terminal device transmits a data packet including the information the first electronic tag over a first PDU session, wherein the first PDU session is a PDU session corresponding to the above route descriptor information. Moreover, the header of the above data packet includes the information of the target server. After receiving the above data packet transmitted by the terminal device over the first PDU session, the UPF transmits the data packet or the information of the first electronic tag that is carried in the data packet to the target server based on the information of the target server that is included in the header of the data packet.

Exemplarily, for the second core network element, in a case where the routing information includes the information of the target server, the second core network element transmits the information of the first electronic tag to the target server based on the information of the target server. For example, the second core network element transmits the information of the first electronic tag to the target server based on the IP address of the target server.

The technical solutions according to the embodiments of the present disclosure provide a method for transmitting information of electronic tags. In this method, the terminal device or the second core network element determines the corresponding routing information after acquiring the information of the first electronic tag, and then transmits the information of the first electronic tag inside and/or outside the operator network based on the routing information. In this way, the transmission capabilities of the information of the electronic tags in the cellular communication network are enhanced, such that the terminal device or the access network device is capable of accurately transmitting the information of the electronic tags to the target server over the core network in the cellular communication network.

In some embodiments, as illustrated in FIG. 5, the method for transmitting the information of the electronic tags includes at least one of the following processes 510 to 540.

In process 510, a first core network element configures a corresponding relationship between tag category information and routing information for a terminal device.

For the descriptions of the corresponding relationship between the tag category information and the routing information, reference may be made to the above embodiments, which are not described herein any further. The routing information in the above corresponding relationship configured by the first core network element for the terminal device includes at least one of route descriptor information (e.g., a DNN and/or slice information) of a PDU session or information (e.g., an IP address) of a target server for collecting the information of the electronic tags. In addition, the first core network element may be a PCF or a network element deployed in a core network for managing electronic tags.

In process 520, the terminal device acquires information of a first electronic tag.

For example, the terminal device directly acquires the information of the first electronic tag from the first electronic tag, or the terminal device acquires the information of the first electronic tag by further processing based on the information acquired from the first electronic tag.

In process 530, the terminal device determines the routing information of the first electronic tag based on the information of the first electronic tag.

The terminal device determines the tag category information of the first electronic tag based on the information of the first electronic tag, and determines the routing information of the first electronic tag based on the corresponding relationship between the tag category information and the routing information.

In some embodiments, the routing information of the first electronic tag includes at least one of the route descriptor information (e.g., a DNN and/or slice information) of the PDU session or the information (e.g., an IP address) of the target server for collecting the information of the electronic tags.

In process 540, the terminal device transmits the information of the first electronic tag to the target server based on the routing information of the first electronic tag.

In a case where the routing information includes the route descriptor information of a PDU session, the terminal device transmits the information of the first electronic tag over a PDU session corresponding to the route descriptor information, and/or in a case where the routing information includes the information of a target server, the terminal device includes the information of the target server in a header of a data packet that carries the information of the first electronic tag, for example, a target IP address included in the header of the IP data packet that carries the information of the first electronic tag is the IP address of the target server. For the details that the terminal device transmits the information of the first electronic tag to the target server based on the above routing information, reference may be made to the above description.

In this embodiment, the first core network element configures the corresponding relationship between the tag category information and the routing information for the terminal device, such that the terminal device, after acquiring the information of the first electronic tag, is capable of determining the routing information of the first electronic tag and accurately transmitting the information of the first electronic tag to the target server over the core network.

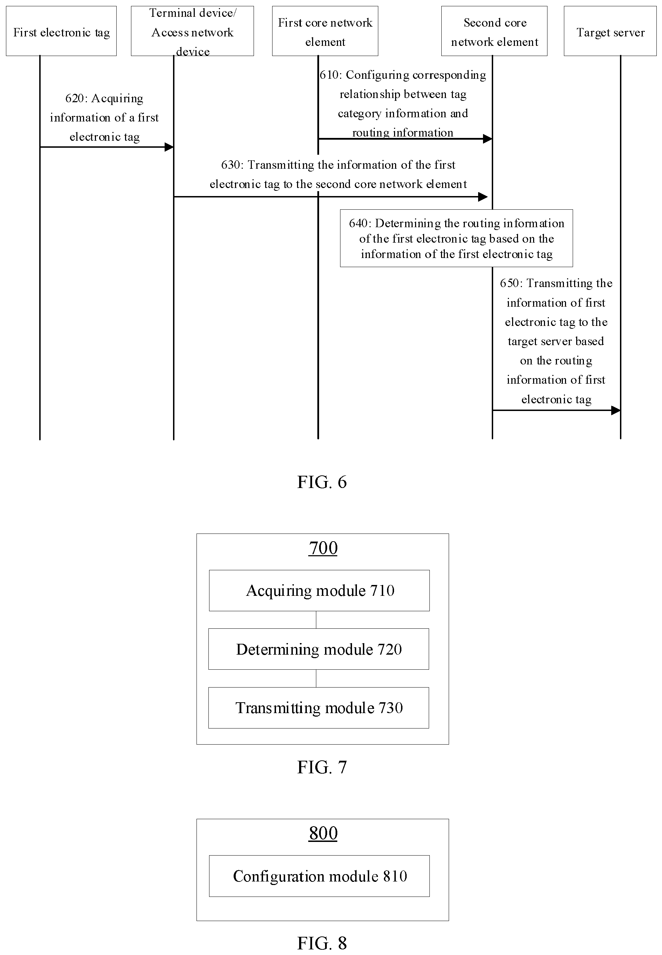

In some embodiments, as illustrated in FIG. 6, the method for transmitting the information of the electronic tags includes at least one of the following processes 610 to 650.

**In** process 610, a first core network element configures corresponding relationship between tag category information and routing information for a second core network element.

For the descriptions of the corresponding relationship between the tag category information and the routing information, reference may be made to the above embodiments, which are not described herein any further. The routing information in the above corresponding relationship configured by the first core network element for the second core network element includes information (e.g., an IP address) of a target server for collecting the information of the electronic tags. In addition, the first core network element may be a PCF or a network element deployed in a core network for managing electronic tags. The second core network element may be a server deployed in a core network for receiving the information of the electronic tags.

**In** process 620, a terminal device or an access network device acquires information of a first electronic tag.

For example, the terminal device or the access network device directly acquires the information of the first electronic tag from the first electronic tag, or the terminal device or the access network device acquires the information of the first electronic tag by further processing based on the information acquired from the first electronic tag.

**In** process 630, the terminal device or the access network device transmits the information of the first electronic tag to the second core network element.

**In** some embodiments, information of the second core network element is preconfigured in the terminal device or the access network device. For example, the information of the second core network element includes at least one of an IP address, a domain name or the like of the second core network element. The terminal device or the access network device, after acquiring the information of the first electronic tag, transmits the information of the first electronic tag to the second core network element based on the information of the second core network element.

In process 640, the second core network element determines the routing information of the first electronic tag based on the information of the first electronic tag.

The second core network element determines the tag category information of the first electronic tag based on the information of the first electronic tag, and determines the routing information of the first electronic tag based on the corresponding relationship between the tag category information and the routing information, e.g., determines the information of a target server for collecting the information of first electronic tag.

In process 650, the second core network element transmits the information of first electronic tag to the target server based on the routing information of first electronic tag.

The second core network element transmits the information of first electronic tag to the target server based on the information (e.g., the IP address) of the target server.

In this embodiment, the first core network element configures the corresponding relationship between the tag category information and the routing information for the second core network element, the terminal device or the access network device, after acquiring the information of the first electronic tag, transmits the information of the first electronic tag to the second core network element, and then the second core network element determines, based on the above corresponding relationship, the information of the target server that receives the electronic tag, thereby accurately transmitting the information of the first electronic tag to the target server by the second core network element.

It should be noted that, to facilitate understanding, the technical solutions according to the present disclosure are described merely from the perspective of interaction among the terminal device, the first core network element and the second core network element in the above method embodiments. The related processes applicable to the terminal device may be individually implemented as a method for transmitting information of electronic tags on the side of the terminal device; the related processes applicable to the first core network element may be individually implemented as a method for transmitting information of electronic tags on the side of the first core network element; and the related processes applicable to the second core network element may be individually implemented as a method for transmitting information of electronic tags on the side of the second core network element.

The following is apparatus embodiments of the present disclosure, which may be applicable for implementing the method embodiments of the present disclosure. For details not disclosed in the apparatus embodiments of the present disclosure, reference may be made to the method embodiments of the present disclosure.

FIG. 7 is a block diagram of an apparatus for transmitting information of electronic tags according to some embodiments of the present disclosure. The apparatus has the functions of implementing the method examples on the side of the terminal device or on the side of the second core network element, and the functions may be implemented by hardware or implemented by software executed by hardware. The apparatus may be the terminal device or the second core network element, or may be disposed in the terminal device or the second core network element. As illustrated in FIG. 7, the apparatus 700 includes an acquiring module 710, a determining module 720, and a transmitting module 730.

The acquiring module 710 is configured to acquire information of a first electronic tag.

The determining module 720 is configured to determine routing information of the first electronic tag based on the information of the first electronic tag, wherein the routing information is used to indicate a transmission path of the information of the first electronic tag inside and/or outside an operator network.

The transmitting module 730 is configured to transmit the information of the first electronic tag based on the routing information.

In some embodiments, the determining module 720 is configured to determine tag category information of the first electronic tag based on the information of the first electronic tag, and determine the routing information of the first electronic tag based on a corresponding relationship between the tag category information and the routing information.

In some embodiments, the apparatus 700 further includes a receiving module configured to acquire the corresponding relationship from a first core network element.

In some embodiments, the first core network element is a PCF or a network element deployed in a core network for managing electronic tags.

In some embodiments, the tag category information of the first electronic tag is identification information of the first electronic tag, or part of fields of identification information of the first electronic tag, or information used to indicate that the first electronic tag is an electronic tag.

In some embodiments, the identification information includes at least one of an EPC, a GPSI, a SUCI, or a SUPI.

In some embodiments, in a case where the apparatus is a terminal device or is disposed in a terminal device, the routing information includes at least one of route descriptor information of a PDU session or information of a target server for collecting the information of the electronic tags.

In some embodiments, the corresponding relationship is configured in a URSP rule; or the corresponding relationship is carried in an NAS message for configuration; or the corresponding relationship is carried in user plane data for configuration.

In some embodiments, in a case where the corresponding relationship is configured in the URSP rule, a traffic descriptor in the URSP rule includes the tag category information, and a route selection descriptor in the URSP rule includes the routing information.

In some embodiments, the transmitting module 730 is configured to: transmit a data packet including the information of the first electronic tag over a first PDU session in a case where the routing information includes the route descriptor information of the PDU session, wherein the first PDU session is a PDU session corresponding to the route descriptor information; and/or transmit a data packet including the information of the first electronic tag to the target server in a case where the routing information includes the information of the target server, wherein the data packet carries the information of the target server.

In some embodiments, the route descriptor information includes at least one of a DNN or slice information. The information of the target server includes an IP address of the target server.

In some embodiments, in a case where the apparatus is a second core network element or is disposed in a second core network element, the routing information includes information of a target server for collecting the information of the electronic tags.

In some embodiments, the second core network element is a server deployed in a core network for receiving the information of the electronic tags.

In some embodiments, the transmitting module 730 is configured to transmit the information of the first electronic tag to the target server based on the information of the target server.

In some embodiments, the acquiring module 710 is configured to receive the information of the first electronic tag from a terminal device or an access network device, wherein information of the second core network element is preconfigured in the terminal device or the access network device.

In some embodiments, the information of the target server includes an IP address of the target server.

FIG. 8 is a block diagram of an apparatus for transmitting information of electronic tags according to some embodiments of the present disclosure. The apparatus has the functions of implementing the method examples on the side of the first core network element, and the functions may be implemented by hardware or implemented by software executed by hardware. The apparatus may the first core network element, or may be disposed in the first core network element. As illustrated in FIG. 8, the apparatus 800 includes a configuration module 810.

The configuration module 810 is configured to configure a corresponding relationship between tag category information and routing information for a terminal device and/or a second core network element, wherein the tag category information is used to indicate a category of an electronic tag, and the routing information is used to indicate a transmission path of information of the electronic tag inside and/or outside an operator network.

In some embodiments, in a case where the corresponding relationship is configured for the terminal device, the corresponding relationship is configured in a URSP rule, or the corresponding relationship is carried in an NAS message for configuration, or the corresponding relationship is carried in user plane data for configuration.

In some embodiments, in a case where the corresponding relationship is configured in the URSP rule, a traffic descriptor for matching traffic in the URSP rule includes the tag category information, and a route selection descriptor in the URSP rule includes the routing information.

In some embodiments, the second core network element is a server deployed in a core network for receiving the information of the electronic tags.

In some embodiments, the first core network element is a PCF or is a network element deployed in a core network for managing electronic tags.

In some embodiments, the tag category information is identification information of an electronic tag, or part of fields of the identification information of the electronic tag, or information used to indicate that a tag is an electronic tag.

In some embodiments, the identification information includes at least one of an EPC, a GPSI, a SUCI, or a SUPI.

In some embodiments, the routing information includes at least one of route descriptor information for establishing a PDU session or information of a target server for collecting the information of the electronic tags.

In some embodiments, the route descriptor information includes at least one of a DNN or slice information.

In some embodiments, the information of the target server includes an IP address of the target server.

It should be noted that in a case where the apparatus according to the above embodiments implements its functions, the division of the functional modules is only for illustrative purposes. In practice, the functions may be distributed to different functional modules based on actual needs, that is, the internal structure of the apparatus may be divided into different functional modules to complete all or part of the functions described above.

Regarding the apparatus in the above embodiments, the specific way in which each module performs operations has been described in detail in the relevant method embodiments, and is not described any further.

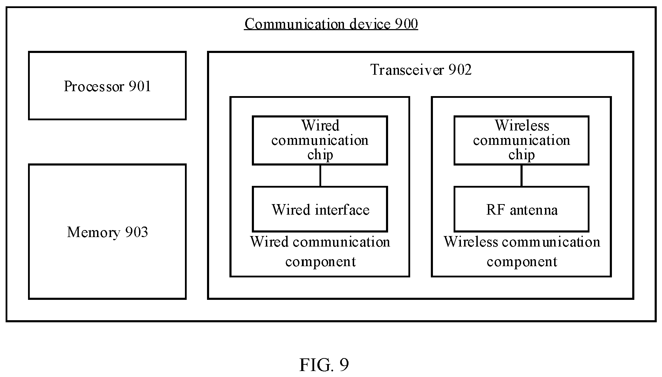

FIG. 9 is a schematic structural diagram of a communication device 900 according to some embodiments of the present disclosure. The communication device 900 may be the terminal device, the first core network element, or the second core network element described above. The communication device 900 may configured to perform the method for transmitting information of electronic tags described above. The communication device 900 includes a processor 901, a transceiver 902, and a memory 903.

The processor 901 includes one or more processing cores. The processor 901 runs various functional applications and performs information processing by running one or more software programs and modules. The processor 901 is configured to perform the processes except the receiving processes and transmitting processes in the above method embodiments.

The transceiver 902 may include a receiver and a transmitter. For example, the transceiver 902 may include a wired communication component, and the wired communication component may include a wired communication chip and a wired interface (e.g., a fiber interface). In some embodiments, the transceiver 902 may also include a wireless communication component, and the wireless communication component may include a wireless communication chip and an RF antenna. The transceiver 902 is configured to perform the transmitting processes and receiving processes in the above method embodiments.

The memory 903 may be connected to the processor 901 and the transceiver 902.

The memory 903 may be configured to store at least one computer program run by a processor. The processor 901 is configured to load and run the at least one computer program to perform the method for transmitting information of electronic tags described above.

In addition, the memory 903 may be practiced by any type of volatile or non-volatile storage device or a combination thereof. The volatile or non-volatile storage device includes but is not limited to: a magnetic disk or an optical disc, an electrically erasable programmable read-only memory (EEPROM), an erasable programmable read-only memory (EPROM), a static random-access memory (SRAM), a read-only memory (ROM), a magnetic memory, a flash memory, and a programmable ROM (PROM).

In some embodiments, in a case where the communication device 900 is a terminal device or a second core network element, the processor 901 is configured to acquire information of a first electronic tag, and determine routing information of the first electronic tag based on the information of the first electronic tag, wherein the routing information is used to indicate a transmission path of the information of the first electronic tag inside and/or outside an operator network. The transceiver 902 is configured to transmit the information of the first electronic tag based on the routing information.

In some embodiments, in a case where the communication device 900 is a first core network element, the transceiver 902 is configured to configure a corresponding relationship between tag category information and routing information for a terminal device and/or a second core network element, wherein the tag category information is used to indicate a category of an electronic tag, and the routing information is used to indicate a transmission path of information of the electronic tag inside and/or outside an operator network.

For details not described in this embodiment, reference may be made to the above embodiments, which are not described herein any further.

Some embodiments of the present disclosure further provide a computer-readable storage medium. The computer-readable storage medium stores a computer program, and the computer program, when loaded and run by a processor of a communication device, causes the communication device to perform the method for transmitting information of electronic tags described above.

In some embodiments, the computer-readable storage medium may include a ROM, a random-access memory (RAM), a solid-state drive (SSD), an optical disk, or the like. The RAM may include a resistance random-access memory (ReRAM) and a dynamic random-access memory (DRAM).

Some embodiments of the present disclosure further provide a chip. The chip includes at least one programmable logic circuit and/or at least one program instruction. The chip, when running on a communication device, causes the communication device to perform the method for transmitting information of electronic tags described above.

Some embodiments of the present disclosure further provide a computer program product. The computer program product includes at least one computer instruction stored in a computer-readable storage medium. The at least one computer instruction, when read from the computer-readable storage medium and executed by a processor of a communication device, causes the communication device to perform the method for transmitting information of electronic tags described above.

It should be understood that the expression "a plurality of" herein refers to two or more. The term "and/or" herein describes an association relationship between associated objects, indicating three possible relationships. For example, the phrase "A and/or B" means (A), (B), or (A and B). The character "/" herein generally represents an "or" relationship between the associated objects.

In addition, the serial numbers of the processes described herein only exemplifies a possible execution sequence among the processes. In some other embodiments, the above processes may also be executed without following the numbered sequence. For example, two processes with different numbers are executed simultaneously or in a sequence reverse to the sequence illustrated in the figures, which is not limited in the embodiments of the present disclosure.

In addition, the technical solutions in various embodiments of the present disclosure may be combined in any way, all of which fall within the protection scope of the present disclosure. Moreover, for details not described in one embodiment, reference may be made to the relevant description in another embodiment.

A person skilled in the art shall appreciate that in the foregoing one or more examples, the functions described in the embodiments of the present disclosure may be implemented by hardware, software, firmware, or any combination thereof. The functions, when implemented by software, may be stored in a computer-readable medium or transmitted as one or more instructions or codes on the computer-readable medium. The computer-readable medium includes a computer storage medium and a communication medium. The communication medium includes any medium that facilitates transfer of a computer program from one place to another. The storage medium may be any available medium accessible by a general-purpose computer or a special-purpose computer.

Described above are merely exemplary embodiments of the present disclosure and are not intended to limit the present disclosure. Any modifications, replacements, improvements, and the like made within the principles of the present disclosure shall fall within the protection scope of the present disclosure as defined by the claims.

## Claims

1. A method for transmitting information of electronic tags, performed by a second core network element, **characterized by** comprising:
acquiring (410) information of a first electronic tag;
acquiring a corresponding relationship between tag category information and routing information from a first core network element;
determining tag category information of the first electronic tag based on the information of the first electronic tag; and determining the routing information of the first electronic tag based on the corresponding relationship, wherein the routing information is used to indicate a transmission path of the information of the first electronic tag inside and/or outside an operator network; and
transmitting (430) the information of the first electronic tag based on the routing information.

2. The method according to claim 1, wherein the first core network element is a policy control function, PCF, network element or a network element deployed in a core network for managing the electronic tags.

3. The method according to claim 1, wherein the tag category information of the first electronic tag comprises:
identification information of the first electronic tag; or
part of fields of identification information of the first electronic tag; or
information used to indicate that the first electronic tag is an electronic tag;
wherein the identification information comprises at least one of: an electronic product code, EPC, a generic public subscription identifier, GPSI, a subscription concealed identifier, SUCI, or a subscription permanent identifier, SUPI.

4. The method according to any one of claims 1 to 3, wherein routing information comprises information of a target server for collecting the information of the electronic tags;
wherein the second core network element is a server deployed in a core network for receiving the information of the electronic tags.

5. The method according to claim 4, wherein transmitting the information of the first electronic tag based on the routing information comprises:
transmitting the information of the first electronic tag to the target server based on the information of the target server.

6. The method according to claim 4 or 5, wherein acquiring the information of the first electronic tag comprises:
receiving the information of the first electronic tag from a terminal device or an access network device, wherein information of the second core network element is preconfigured in the terminal device or the access network device.

7. The method according to any one of claims 4 to 6, wherein the information of the target server comprises an Internet Protocol, IP, address of the target server.

8. A method for transmitting information of electronic tags, performed by a first core network element, **characterized by** the method comprising:
configuring (510, 610) a corresponding relationship between tag category information and routing information for a second core network element, wherein the tag category information is used to indicate a category of an electronic tag, and the routing information is used to indicate a transmission path of information of the electronic tag inside and/or outside an operator network.

9. The method according to claim 8, wherein the first core network element is a policy control function, PCF, network element or a network element deployed in a core network for managing the electronic tags.

10. The method according to claim 8 or 9, wherein the tag category information comprises:
identification information of the electronic tag; or
part of fields of identification information of the electronic tag; or
information used to indicate that a tag is an electronic tag;
wherein the identification information comprises at least one of: an electronic product code, EPC, a generic public subscription identifier, GPSI, a subscription concealed identifier, SUCI, or a subscription permanent identifier, SUPI.

11. The method according to any one of claims 8 to 10, wherein the routing information comprises at least one of route descriptor information for establishing a protocol data unit, PDU, session or information of a target server for collecting the information of the electronic tags;
wherein the information of the target server comprises an Internet Protocol, IP, address of the target server.

12. An apparatus (700) for transmitting information of electronic tags, **characterized by** comprising:
an acquiring module (710), configured to acquire information of a first electronic tag;
the acquiring module (710) is further configured to acquire a corresponding relationship between tag category information and routing information from a first core network element;
a determining module (720), configured to: determine tag category information of the first electronic tag based on the information of the first electronic tag; and determine the routing information of the first electronic tag based on the corresponding relationship, wherein the routing information is used to indicate a transmission path of the information of the first electronic tag inside and/or outside an operator network; and
a transmitting module (730), configured to transmit the information of the first electronic tag based on the routing information.

13. An apparatus (800) for transmitting information of electronic tags, **characterized by** comprising:
a configuration module (810), configured to configure a corresponding relationship between tag category information and routing information for a terminal device and/or a second core network element, wherein the tag category information is used to indicate a category of an electronic tag, and the routing information is used to indicate a transmission path of information of the electronic tag inside and/or outside an operator network.

## Patentansprüche

1. Verfahren zum Übertragen von Informationen elektronischer Etiketten, das durch ein zweites Kernnetzelement durchgeführt wird, **dadurch gekennzeichnet, dass** es Folgendes umfasst:
Erfassen (410) von Informationen eines ersten elektronischen Etiketts;
Erfassen einer entsprechenden Beziehung zwischen Etikettenkategorie-Informationen und Routing-Informationen von einem ersten Kernnetzelement;
Bestimmen von Etikettenkategorie-Informationen des ersten elektronischen Etiketts basierend auf den Informationen des ersten elektronischen Etiketts; und
Bestimmen der Routing-Informationen des ersten elektronischen Etiketts basierend auf der entsprechenden Beziehung, wobei die Routing-Informationen verwendet werden, um einen Übertragungsweg der Informationen des ersten elektronischen Etiketts innerhalb und/oder außerhalb eines Betreibernetzes anzugeben; und
Übertragen (430) der Informationen des ersten elektronischen Etiketts basierend auf den Routing-Informationen.

2. Verfahren nach Anspruch 1, wobei das erste Kernnetzelement ein Policy-Control-Function-Netzelement, PCF-Netzelement, oder ein in einem Kernnetz zum Verwalten der elektronischen Etiketten eingesetztes Netzelement ist.

3. Verfahren nach Anspruch 1, wobei die Etikettenkategorie-Informationen des ersten elektronischen Etiketts Folgendes umfassen:
Identifikationsinformationen des ersten elektronischen Etiketts; oder
einen Teil von Feldern von Identifikationsinformationen des ersten elektronischen Etiketts; oder
Informationen, die verwendet werden, um anzugeben, dass das erste elektronische Etikett ein elektronisches Etikett ist;
wobei die Identifikationsinformationen mindestens eines von Folgendem umfassen: einem elektronischen Produktcode, EPC, einem Generic Public Subscription Identifier, GPSI, einem Subscription Concealed Identifier, SUCI, oder einem Subscription Permanent Identifier, SUPI.

4. Verfahren nach einem der Ansprüche 1 bis 3, wobei Routing-Informationen Informationen eines Zielservers zum Sammeln der Informationen der elektronischen Etiketten umfassen;
wobei das zweite Kernnetzelement ein in einem Kernnetz zum Empfangen der Informationen der elektronischen Etiketten eingesetzter Server ist.

5. Verfahren nach Anspruch 4, wobei das Übertragen der Informationen des ersten elektronischen Etiketts basierend auf den Routing-Informationen Folgendes umfasst:
Übertragen der Informationen des ersten elektronischen Etiketts an den Zielserver basierend auf den Informationen des Zielservers.

6. Verfahren nach Anspruch 4 oder 5, wobei das Erfassen der Informationen des ersten elektronischen Etiketts Folgendes umfasst:
Empfangen der Informationen des ersten elektronischen Etiketts von einer Endgerätevorrichtung oder einer Zugangsnetzvorrichtung, wobei Informationen des zweiten Kernnetzelements in der Endgerätevorrichtung oder der Zugangsnetzvorrichtung vorkonfiguriert sind.

7. Verfahren nach einem der Ansprüche 4 bis 6, wobei die Informationen des Zielservers eine Internetprotokoll-Adresse, IP-Adresse, des Zielservers umfassen.

8. Verfahren zum Übertragen von Informationen elektronischer Etiketten, das durch ein erstes Kernnetzelement durchgeführt wird, **dadurch gekennzeichnet, dass** das Verfahren Folgendes umfasst:
Konfigurieren (510, 610) einer entsprechenden Beziehung zwischen Etikettenkategorie-Informationen und Routing-Informationen für ein zweites Kernnetzelement, wobei die Etikettenkategorie-Informationen verwendet werden, um eine Kategorie eines elektronischen Etiketts anzugeben, und die Routing-Informationen verwendet werden, um einen Übertragungsweg von Informationen des elektronischen Etiketts innerhalb und/oder außerhalb eines Betreibernetzes anzugeben.

9. Verfahren nach Anspruch 8, wobei das erste Kernnetzelement ein Policy-Control-Function-Netzelement, PCF-Netzelement, oder ein in einem Kernnetz zum Verwalten der elektronischen Etiketten eingesetztes Netzelement ist.

10. Verfahren nach Anspruch 8 oder 9, wobei die Etikettenkategorie-Informationen Folgendes umfassen:
Identifikationsinformationen des elektronischen Etiketts; oder
einen Teil von Feldern von Identifikationsinformationen des elektronischen Etiketts; oder
Informationen, die verwendet werden, um anzugeben, dass ein Etikett ein elektronisches Etikett ist;
wobei die Identifikationsinformationen mindestens eines von Folgendem umfassen: einem elektronischen Produktcode, EPC, einem Generic Public Subscription Identifier, GPSI, einem Subscription Concealed Identifier, SUCI, oder einem Subscription Permanent Identifier, SUPI.

11. Verfahren nach einem der Ansprüche 8 bis 10, wobei die Routing-Informationen Routendeskriptor-Informationen zum Einrichten einer Protocol-Data-Unit-Sitzung, PDU-Sitzung, und/oder Informationen eines Zielservers zum Sammeln der Informationen der elektronischen Etiketten umfassen;
wobei die Informationen des Zielservers eine Internetprotokoll-Adresse, IP-Adresse, des Zielservers umfassen.

12. Einrichtung (700) zum Übertragen von Informationen elektronischer Etiketten, **dadurch gekennzeichnet, dass** sie Folgendes umfasst:
ein Erfassungsmodul (710), das dazu konfiguriert ist, Informationen eines ersten elektronischen Etiketts zu erfassen;
wobei das Erfassungsmodul (710) ferner dazu konfiguriert ist, eine entsprechende Beziehung zwischen Etikettenkategorie-Informationen und Routing-Informationen von einem ersten Kernnetzelement zu erfassen;
ein Bestimmungsmodul (720), das zu Folgendem konfiguriert ist: Bestimmen von Etikettenkategorie-Informationen des ersten elektronischen Etiketts basierend auf den Informationen des ersten elektronischen Etiketts; und
Bestimmen der Routing-Informationen des ersten elektronischen Etiketts basierend auf der entsprechenden Beziehung, wobei die Routing-Informationen verwendet werden, um einen Übertragungsweg der Informationen des ersten elektronischen Etiketts innerhalb und/oder außerhalb eines Betreibernetzes anzugeben; und
ein Übertragungsmodul (730), das dazu konfiguriert ist, die Informationen des ersten elektronischen Etiketts basierend auf den Routing-Informationen zu übertragen.

13. Einrichtung (800) zum Übertragen von Informationen elektronischer Etiketten, **dadurch gekennzeichnet, dass** sie Folgendes umfasst:
ein Konfigurationsmodul (810), das dazu konfiguriert ist, eine entsprechende Beziehung zwischen Etikettenkategorie-Informationen und Routing-Informationen für eine Endgerätevorrichtung und/oder ein zweites Kernnetzelement zu konfigurieren, wobei die Etikettenkategorie-Informationen verwendet werden, um eine Kategorie eines elektronischen Etiketts anzugeben, und die Routing-Informationen verwendet werden, um einen Übertragungsweg von Informationen des elektronischen Etiketts innerhalb und/oder außerhalb eines Betreibernetzes anzugeben.

## Revendications

1. Procédé de transmission d'informations d'étiquettes électroniques, réalisé par un deuxième élément de réseau central, **caractérisé en ce qu'**il comprend les étapes consistant à :
acquérir (410) des informations d'une première étiquette électronique ;
acquérir une relation correspondante entre des informations de catégorie d'étiquette et des informations d'acheminement en provenance d'un premier élément de réseau central ;
déterminer des informations de catégorie d'étiquette de la première étiquette électronique sur la base des informations de la première étiquette électronique ; et
déterminer les informations d'acheminement de la première étiquette électronique sur la base de la relation correspondante, les informations d'acheminement étant utilisées pour indiquer un chemin de transmission des informations de la première étiquette électronique à l'intérieur et/ou à l'extérieur d'un réseau d'opérateur ; et
transmettre (430) les informations de la première étiquette électronique sur la base des informations d'acheminement.

2. Procédé selon la revendication 1, dans lequel le premier élément de réseau central est un élément de réseau de fonction de commande de politique, PCF, ou un élément de réseau déployé dans un réseau central pour gérer les étiquettes électroniques.

3. Procédé selon la revendication 1, dans lequel les informations de catégorie d'étiquette de la première étiquette électronique comprennent :
des informations d'identification de la première étiquette électronique ; ou
une partie des champs des informations d'identification de la première étiquette électronique ; ou
des informations utilisées pour indiquer que la première étiquette électronique est une étiquette électronique ;
dans lequel les informations d'identification comprennent au moins un élément parmi : un code de produit électronique, EPC, un identifiant d'abonnement public générique, GPSI, un identifiant caché d'abonnement, SUCI, ou un identifiant permanent d'abonnement, SUPI.

4. Procédé selon l'une quelconque des revendications 1 à 3, dans lequel les informations d'acheminement comprennent des informations d'un serveur cible servant à collecter les informations des étiquettes électroniques ;
dans lequel le deuxième élément de réseau central est un serveur déployé dans un réseau central pour recevoir les informations des étiquettes électroniques.

5. Procédé selon la revendication 4, dans lequel la transmission des informations de la première étiquette électronique sur la base des informations d'acheminement consiste à :
transmettre les informations de la première étiquette électronique au serveur cible sur la base des informations du serveur cible.

6. Procédé selon la revendication 4 ou 5, dans lequel l'acquisition des informations de la première étiquette électronique consiste à :
recevoir les informations de la première étiquette électronique en provenance d'un dispositif terminal ou d'un dispositif de réseau d'accès, les informations du deuxième élément de réseau central étant préconfigurées dans le dispositif terminal ou le dispositif de réseau d'accès.

7. Procédé selon l'une quelconque des revendications 4 à 6, dans lequel les informations du serveur cible comprennent une adresse IP (protocole Internet) du serveur cible.

8. Procédé de transmission d'informations d'étiquettes électroniques, réalisé par un premier élément de réseau central, le procédé étant **caractérisé en ce qu'**il comprend l'étape consistant à :
configurer (510, 610) une relation correspondante entre des informations de catégorie d'étiquette et des informations d'acheminement pour un deuxième élément de réseau central, les informations de catégorie d'étiquette étant utilisées pour indiquer une catégorie d'une étiquette électronique, et les informations d'acheminement étant utilisées pour indiquer un chemin de transmission des informations de l'étiquette électronique à l'intérieur et/ou à l'extérieur d'un réseau d'opérateur.

9. Procédé selon la revendication 8, dans lequel le premier élément de réseau central est un élément de réseau de fonction de commande de politique, PCF, ou un élément de réseau déployé dans un réseau central pour gérer les étiquettes électroniques.

10. Procédé selon la revendication 8 ou 9, dans lequel les informations de catégorie d'étiquette comprennent :
des informations d'identification de l'étiquette électronique ; ou
une partie des champs des informations d'identification de l'étiquette électronique ; ou
des informations utilisées pour indiquer qu'une étiquette est une étiquette électronique ;
dans lequel les informations d'identification comprennent au moins un élément parmi : un code de produit électronique, EPC, un identifiant d'abonnement public générique, GPSI, un identifiant caché d'abonnement, SUCI, ou un identifiant permanent d'abonnement, SUPI.

11. Procédé selon l'une quelconque des revendications 8 à 10, dans lequel les informations d'acheminement comprennent au moins l'une des informations suivantes :
informations de descripteur d'acheminement servant à établir une session d'unité de données de protocole, PDU, informations d'un serveur cible servant à collecter les informations des étiquettes électroniques ;
dans lequel les informations du serveur cible comprennent une adresse IP (protocole Internet) du serveur cible.

12. Appareil (700) pour transmettre des informations d'étiquettes électroniques, **caractérisé en ce qu'**il comprend :
un module d'acquisition (710), configuré pour acquérir des informations d'une première étiquette électronique ; le module d'acquisition (710) étant en outre configuré pour acquérir une relation correspondante entre des informations de catégorie d'étiquette et des informations d'acheminement en provenance d'un premier élément de réseau central ;
un module de détermination (720), configuré pour : déterminer des informations de catégorie d'étiquette de la première étiquette électronique sur la base des informations de la première étiquette électronique ; et
déterminer les informations d'acheminement de la première étiquette électronique sur la base de la relation correspondante, les informations d'acheminement étant utilisées pour indiquer un chemin de transmission des informations de la première étiquette électronique à l'intérieur et/ou à l'extérieur d'un réseau d'opérateur ; et
un module de transmission (730), configuré pour transmettre les informations de la première étiquette électronique sur la base des informations d'acheminement.

13. Appareil (800) pour transmettre des informations d'étiquettes électroniques, **caractérisé en ce qu'**il comprend :
un module de configuration (810), configuré pour configurer une relation correspondante entre des informations de catégorie d'étiquette et des informations d'acheminement pour un dispositif terminal et/ou un deuxième élément de réseau central, les informations de catégorie d'étiquette étant utilisées pour indiquer une catégorie d'une étiquette électronique, et les informations d'acheminement étant utilisées pour indiquer un chemin de transmission des informations de l'étiquette électronique à l'intérieur et/ou à l'extérieur d'un réseau d'opérateur.
